# EUROPEAN PATENT APPLICATION

(11) **EP 3 904 970 A1**
(43) Date of publication of application: **03.11.2021**
(21) Application number: 19906567.3
(22) Date of filing: 27.11.2019
(51) Int. Cl.: G04R 20/00, H04W 56/00, H04B 7/26

(54) **METHODS FOR ACQUIRING AND SENDING TIME INFORMATION, TERMINAL AND NETWORK DEVICE**

(30) Priority: 25.12.2018 CN 201811594231
(71) Applicant: VIVO MOBILE COMMUNICATION CO., LTD., Dongguan, Guangdong 523860 (CN)
(72) Inventor: WU, Yumin, Dongguan, Guangdong 523860 (CN); KE, Xiaowan, Dongguan, Guangdong 523860 (CN)
(74) Representative: Conti, Marco
(86) International application number: PCT/CN2019/121196
(87) International publication number: WO 2020/134810

(57) **Abstract**

A time information obtaining method is provided, including: receiving a first message (201), where the first message includes at least one piece of time information, and each piece of time information corresponds to a respective clock source; and obtaining, from the first message, time information corresponding to a clock source required by a terminal (202). A time information transmission method, a terminal, and a network device are further provided.

## Description

### CROSS-REFERENCE TO RELATED APPLICATIONS

This application claims priority to Chinese Patent Application No. 201811594231.4, filed in China on December 25, 2018, which is incorporated herein by reference in its entirety.

### TECHNICAL FIELD

This disclosure relates to the field of communications technologies, and in particular, to a time information obtaining method and transmission method, a terminal, and a network device.

### BACKGROUND

In a communications system, time information is generally provided to a terminal by a network side, to ensure consistent understanding of time between the terminal and the network side. However, as terminals come with increasing types and functions, time information that can be provided by a network side also increases. For example, the time information that can be provided by the network side includes: coordinated universal time (Coordinated Universal Time, UTC), daylight saving time (Daylight Saving Time, DST), global positioning system (Global Positioning System, GPS) time, local time, and the like. However, in a communications system in the related art, time information obtained by a terminal may not be time information required by the terminal, resulting in poor timing performance of the terminal.

### SUMMARY

Embodiments of this disclosure provide a time information obtaining method and transmission method, a terminal, and a network device, to resolve relatively poor timing performance of a terminal.

According to a first aspect, an embodiment of this disclosure provides a time information obtaining method, applied to a terminal, including:
receiving a first message, where the first message includes at least one piece of time information, and each piece of time information corresponds to a respective clock source; and
obtaining, from the first message, time information corresponding to a clock source required by the terminal.

According to a second aspect, an embodiment of this disclosure further provides a time information transmission method, applied to a network device, including:
transmitting a first message, where the first message includes at least one piece of time information, and each piece of time information corresponds to a respective clock source.

According to a third aspect, an embodiment of this disclosure further provides a terminal, including:
a receiving module, configured to receive a first message, where the first message includes at least one piece of time information, and each piece of time information corresponds to a respective clock source; and
an obtaining module, configured to obtain, from the first message, time information corresponding to a clock source required by the terminal.

According to a fourth aspect, an embodiment of this disclosure further provides a network device, including:
a transmission module, configured to transmit a first message, where the first message includes at least one piece of time information, and each piece of time information corresponds to a respective clock source.

According to a fifth aspect, an embodiment of this disclosure further provides a terminal, including: a memory, a processor, and a program stored in the memory and capable of running on the processor, where when the program is executed by the processor, the steps of the time information obtaining method according to the embodiments of this disclosure are implemented.

According to a sixth aspect, an embodiment of this disclosure further provides a network device, including: a memory, a processor, and a program stored in the memory and capable of running on the processor, where when the program is executed by the processor, the steps of the time information transmission method according to the embodiments of this disclosure are implemented.

According to a seventh aspect, an embodiment of this disclosure further provides a computer-readable storage medium, where the computer-readable storage medium stores a computer program, and when the computer program is executed by a processor, the steps of the time information obtaining method according to the embodiments of this disclosure are implemented, or when the computer program is executed by a processor, the steps of the time information transmission method according to the embodiments of this disclosure are implemented.

In the embodiments of this disclosure, the first message is received, where the first message includes the at least one piece of time information, and each piece of time information corresponds to a respective clock source; and the time information corresponding to the clock source required by the terminal is obtained from the first message. In this way, the terminal can obtain the time information corresponding to the clock source required by the terminal, so that timing performance of the terminal can be improved.

### BRIEF DESCRIPTION OF DRAWINGS

FIG. 1 is a structural diagram of a network system to which an embodiment of this disclosure may be applied;
FIG. 2 is a flowchart of a time information obtaining method according to an embodiment of this disclosure;
FIG. 3 is a flowchart of a time information transmission method according to an embodiment of this disclosure;
FIG. 4 is a structural diagram of a terminal according to an embodiment of this disclosure;
FIG. 5 is a structural diagram of a network device according to an embodiment of this disclosure;
FIG. 6 is a structural diagram of another terminal according to an embodiment of this disclosure; and
FIG. 7 is a structural diagram of another network device according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are merely a part rather than all of the embodiments of this disclosure. All other embodiments that a person of ordinary skill in the art obtains without creative efforts based on the embodiments of this disclosure shall fall within the protection scope of this disclosure.

In the specification and claims of this application, the terms "including", and any other variants mean to cover a non-exclusive inclusion. For example, a process, method, system, product, or device that includes a list of steps or units is not necessarily limited to those steps or units, but may include other steps or units not expressly listed or inherent to such a process, method, product, or device. Moreover, use of "and/or" in the specification and claims represents at least one of the connected objects. For example, A and/or B means three cases: A alone, B alone, or A and B together.

In the embodiments of this disclosure, terms such as "an example" or "for example" are used to represent examples, illustrations, or explanations. Any embodiment or design solution described as "an example" or "for example" in the embodiments of this disclosure shall not be interpreted to be more optional or advantageous than other embodiments or design solutions. Specifically, the terms such as "an example" or "for example" are used to present related concepts in a specific manner.

The following describes the embodiments of this disclosure with reference to the accompanying drawings. A time information obtaining method and transmission method, a terminal, and a network device according to the embodiments of this disclosure may be applied to a wireless communications system. The wireless communications system may be a fifth-generation (5^{th} generation, 5G) system, an evolved long term evolution (Evolved Long Term Evolution, eLTE) system, a long term evolution (Long Term Evolution, LTE) system, a later evolved communications system, or the like.

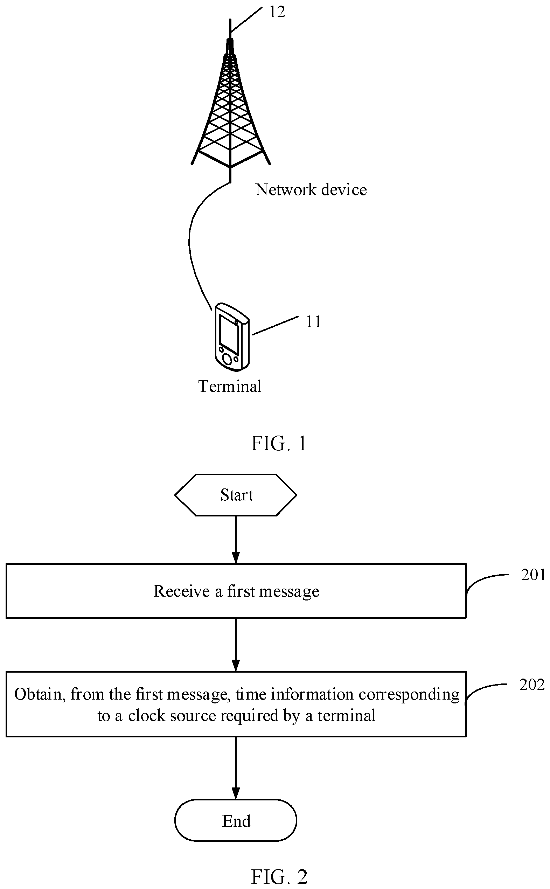

FIG. 1 is a structural diagram of a network system to which an embodiment of this disclosure may be applied. As shown in FIG. 1, the network system includes a terminal 11 and a network device 12. The terminal 11 may be user equipment (User Equipment, UE) or other terminal-side devices such as a mobile phone, a tablet personal computer (Tablet Personal Computer), a laptop computer (Laptop Computer), a personal digital assistant (personal digital assistant, PDA), a mobile Internet device (Mobile Internet Device, MID), a wearable device (Wearable Device), or a robot. It should be noted that a specific type of the terminal 11 is not limited in the embodiments of this disclosure. The network device 12 may be a fourth-generation (4^{th} generation, 4G) base station, a 5G base station, a base station of a later version, or a base station in other communications systems, or may be referred to as a NodeB, an evolved NodeB, a transmission reception point (Transmission Reception Point, TRP), an access point (Access Point, AP), or other terms in the field. Provided that the same technical effects are achieved, the network device is not limited to any particular technical term. In addition, the network device 12 may be a master node (Master Node, MN) or a secondary node (Secondary Node, SN). It should be noted that in the embodiments of this disclosure, the 5G base station is used as only an example, but the network device is not limited to any specific type.

FIG. 2 is a flowchart of a time information obtaining method according to an embodiment of this disclosure. The method is applied to a terminal, and as shown in FIG. 2, includes the following steps.

Step 201. Receive a first message, where the first message includes at least one piece of time information, and each piece of time information corresponds to a respective clock source.

The first message may be broadcast by a network device or transmitted by a network device through dedicated signaling. For example, the first message includes a broadcast message or downlink dedicated signaling (for example, a DL Information Transfer message).

In addition, the at least one piece of time information included in the first message may be one or more pieces of time information determined by the network device on its own or based on a message reported by the terminal. For example, the at least one piece of time information includes at least one of GPS time, UTC time, DST time, and local time. In addition, the at least one piece of time information includes time information corresponding to a clock source required by the terminal.

That each piece of time information corresponds to a respective clock source may be understood as that each piece of time information comes from its corresponding clock source, or each piece of time information is provided by its corresponding clock source. The clock source may be a source of time information. For example, for GPS time provided to the terminal by a network side, a clock source of the GPS time is a GPS satellite; and for UTC time provided by a network side to the terminal, a clock source of the UTC time may be an atomic clock that can provide UTC time and that is connected to the network device (for example, a base station or a core network device).

In addition, in this embodiment of this disclosure, different clock sources may provide a same type or different types of time information. For example, a clock source 1 and a clock source 2 may both provide UTC time, that is, the UTC time may include both UTC time information 2 corresponding to the clock source 1 and UTC time information 2 corresponding to the clock source 2. In addition, when different clock sources provide a same type or different types of time information, the provided time information may be of the same or different precision. For example, precision (or granularity) of the UTC time provided by the clock source 1 is 1 second, and precision of the UTC time provided by the clock source 2 is 1 microsecond. In addition, one clock source may provide one or more pieces of time information. For example, the clock source 1 provides UTC time information 1 and GPS time information.

Step 202. Obtain, from the first message, time information corresponding to a clock source required by the terminal.

The obtaining time information corresponding to a clock source required by the terminal may be obtaining, from the time information, the time information corresponding to the clock source required by the terminal, based on the time information included in the first message. In addition, the clock source required by the terminal may be a clock source required by a type of the terminal, a clock source required by a service of the terminal, or the like. This is not limited. For example, the terminal is a mobile phone, and since mobile phones generally require different time precision, it can be determined that the terminal requires a clock source with ordinary precision, for example, a clock source with precision of 1 second; or the terminal is a robot, and since robots generally require relatively high time precision, it can be determined that the terminal requires a high-precision clock source, for example, a clock source with precision of 1 microsecond; or services of the terminal include the GPS service, and therefore it can be determined that the clock source required by the terminal is a GPS satellite clock source.

In addition, one or more clock sources may be required by the terminal. In addition, it should be noted that, when a given clock source corresponds to only one piece of time information and the terminal requires that time information, it is considered that the terminal requires the clock source corresponding to the time information. When there are multiple pieces of time information corresponding to a same clock source and the terminal requires that clock source, step 202 may be obtaining time information required by the terminal from the multiple pieces of time information corresponding to the required clock source, or obtaining all of the multiple pieces of time information corresponding to the required clock source.

It should be noted that the obtaining time information corresponding to a clock source required by the terminal may be using the time information by the terminal. For example, the terminal transmits the obtained time information to a higher-layer application.

With the foregoing steps, the terminal can obtain the time information corresponding to the clock source required by the terminal, to ensure that the time information obtained by the terminal is that required by the terminal, so as to improve timing performance of the terminal.

In an optional implementation, different time information in the at least one piece of time information corresponds to different clock sources; or
in a case that the at least one piece of time information is multiple pieces of time information, M pieces of time information corresponding to a same clock source are present in the multiple pieces of time information, where M is an integer greater than 1, and M is less than or equal to the number of pieces of time information included in the first message; or
in a case that the at least one piece of time information is multiple pieces of time information, N pieces of time information corresponding to different clock sources but belonging to a same time type are present in the multiple pieces of time information, where N is an integer greater than 1, and N is less than or equal to the number of pieces of time information included in the first message.

That different time information corresponds to different clock sources may be that each piece of time information corresponds to a different clock source.

That M pieces of time information corresponding to a same clock source are present in the multiple pieces of time information may be understood as that some of the multiple pieces of time information are corresponding to a same clock source, that is, the first message includes multiple pieces of time information corresponding to a same clock source. For example, the first message includes UTC time (1) and GPS time (1), where the UTC time (1) corresponds to a clock source (1) and the GPS time (1) corresponds to the clock source (1).

It should be noted that if the first message includes multiple pieces of time information corresponding to a same clock source, and the terminal requires that clock source, step 202 may be: obtaining, by the terminal, time information required by the terminal from the multiple pieces of time information corresponding to the clock source required by the terminal, for example, obtaining time information of a time type or time precision required by the terminal from the multiple pieces of time information corresponding to the clock source; or obtaining, by the terminal, all of the multiple pieces of time information corresponding to the clock source required by the terminal. For example, the first message includes UTC time (1) and GPS time (1), where the UTC time (1) corresponds to a clock source (1) and the GPS time (1) corresponds to the clock source (1), and the clock source required by the terminal is the clock source (1). Therefore, the terminal may obtain the UTC time (1) and the GPS time (1), or obtain only the UTC time (1) when the terminal needs UTC time.

The N pieces of time information corresponding to different clock sources but belonging to a same time type may be understood as: Multiple pieces of time information belonging to a same time type exists in the multiple pieces of time information and corresponds to different clock sources. For example, the first message includes UTC time (1) and GPS time (1), and UTC time (2), where the UTC time (1) corresponds to a clock source (1), the GPS time (1) corresponds to the clock source (1), and the UTC time (2) corresponds to a clock source (2).

It should be noted that in this embodiment of this disclosure, the time type includes but is not limited to time types such as UTC, GPS, DST, and local.

In an optional implementation, the at least one piece of time information includes:
at least one piece of time information associated with the terminal.

The at least one piece of time information associated with the terminal may be at least one piece of time information including time information required by the terminal. For example, the at least one piece of time information is the time information required by the terminal.

In this implementation, only the at least one piece of time information associated with the terminal is transmitted in the first message, thus reducing overheads for the first message.

In an optional implementation, the at least one piece of time information associated with the terminal includes:
at least one piece of time information subscribed to by subscription information of the terminal.

The at least one piece of time information subscribed to by the subscription information may include time information corresponding to a clock source subscribed to by the subscription information, or may include time information of a time type subscribed to by the subscription information, or may include one or more pieces of specific time information corresponding to a clock source subscribed to by the subscription information. For example, the terminal requests to obtain, through subscription, UTC time corresponding to a clock source (1). In this way, the first message includes only the at least one piece of time information subscribed to by the subscription information of the terminal, thus reducing overheads for the first message.

### Example 1

Step 1. The network transmits, based on the subscription information of the terminal, clock source information corresponding to time information to the terminal through dedicated signaling. For example, in the downlink dedicated signaling (for example, a DL Information Transfer message) transmitted by the network side based on the subscription information of the terminal (for example, the terminal has subscribed to one or more pieces of time information of one or more clock sources), UTC time (1) corresponds to a clock source (1), GPS time (1) corresponds to the clock source (1), UTC time (2) corresponds to a clock source (2), and DST time (1) corresponds to the clock source (2). Certainly, the time information may be transmitted together with the clock source information.

It should be noted that the clock source information may be information used to indicate time information-clock source mappings.

Step 2. After receiving the information in step 1, the terminal employs, based on its own need, the time information corresponding to the clock source required by the terminal. For example, after the terminal receives the time information and the clock source information in step 1, if the terminal requires the UTC time (1) of the clock source (1), the terminal transmits the UTC time (1) of the clock source (1) to a higher-layer application.

In addition, in an optional implementation, the at least one piece of time information associated with the terminal includes:
at least one piece of time information requested by a request message transmitted by the terminal.

The request message may be transmitted to the network device before step 201, and the request message may be system information or uplink dedicated signaling (for example, a UL Information Transfer message). In addition, the request message may also be referred to as a second message in the embodiments of this disclosure.

Optionally, the request message may include at least one of the following:
a clock source identifier, a time type identifier, and a time precision identifier, where
in a case that the request message includes the clock source identifier, a clock source corresponding to the at least one piece of time information is a clock source identified by the clock source identifier; and/or
in a case that the request message includes the time type identifier, a time type of the at least one piece of time information is a time type identified by the time type identifier; and/or
in a case that the request message includes the time precision identifier, time precision of the at least one piece of time information is time precision identified by the time precision identifier.

The clock source identifier is used to identify a clock source, and the request message may include one or more clock source identifiers, for example, an identifier of the clock source (1) and/or an identifier of the clock source (2).

The time type identifier is used to identify a time type, for example, time types such as UTC, GPS, DST, and local. One time type may include one or more pieces of time information. For example, in the UTC time type, the UTC time (1) corresponds to the clock source (1), and the UTC time (2) corresponds to the clock source (2). Similarly, the request message may include one or more time type identifiers, for example, an identifier of at least one time type of UTC time, GTP time, DST time, and local time.

The time precision identifier is used to identify time information precision or clock source precision, for example, time precision of 1 second or 1 microsecond.

It should be noted that "or" as in "and/or" may mean that any one of the three conditions may be satisfied, and "and" as in "and/or" may mean that any two or three of the three conditions are satisfied.

For example, in the case that the request message includes only the clock source identifier, the at least one piece of time information is time information corresponding to the clock source identified by the clock source identifier; or in the case that the request message includes only the time type identifier, the at least one piece of time information is time information of the time type identified by the time type identifier; or in the case that the request message includes the clock source identifier and the time type identifier, the at least one piece of time information is time information that is corresponding to the clock source identified by the clock source identifier and that is of the time type identified by the time type identifier; or in the case that the request message includes the clock source identifier and the time precision identifier, the at least one piece of time information is time information that has precision corresponding to the time precision identifier and that is of the time type identified by the time type identifier.

In this implementation, since the terminal has transmitted the request message, it is ensured that the time information transmitted by the network device includes the time information required by the terminal, which further reduces overheads for the first message.

It should be noted that in this embodiment of this disclosure, it is not limited that the first message includes only the at least one piece of time information subscribed to by the subscription information, or the at least one piece of time information requested by the request message. For example, in an implementation, in addition to the at least one piece of time information subscribed to by the subscription information or the at least one piece of time information requested by the request message, the first message may also include other time information. This is not limited.

Transmitting the request message through system information and transmitting the request message through uplink dedicated signaling are separately described below as examples.

### Example 2

Step 1. The terminal transmits a system information request message, requesting time information required by the terminal, where the time information request message includes any combination of one or more of the following:
a clock source identifier, for example, a clock source (1) and/or a clock source (2); and
a time type identifier, for example, UTC time, and/or GTP time, and/or DST time, and/or local time.

Step 2. The network transmits clock source information corresponding to time information to the terminal through broadcast. For example, in a system information block (System Information Blocks, SIB) 9, UTC time (1) corresponds to the clock source (1), GPS time (1) corresponds to the clock source (1), UTC time (2) corresponds to the clock source (2), and DST time (1) corresponds to the clock source (2). Certainly, the time information may be transmitted together with the clock source information.

Step 3. After receiving the information in step 2, the terminal employs, based on its own need, the time information corresponding to the clock source required by the terminal. For example, after the terminal receives the time information and the clock source information in the SIB 9 in step 2, if the terminal requires the UTC time (1) of the clock source (1), the terminal transmits the UTC time (1) of the clock source (1) to a higher-layer application.

### Example 3

Step 1. The terminal requests, through uplink dedicated signaling (for example, a UL Information Transfer message), the time information required by the terminal, where the time information request message includes any combination of one or more of the following:
a clock source identifier, for example, a clock source (1) and/or a clock source (2); and
a time type identifier, for example, UTC time, and/or GTP time, and/or DST time, and/or local time.

Step 2. The network transmits clock source information corresponding to time information to the terminal through dedicated signaling. For example, in a DL information transfer message, UTC time (1) corresponds to the clock source (1), GPS time (1) corresponds to the clock source (1), UTC time (2) corresponds to the clock source (2), and DST time (1) corresponds to the clock source (2). Certainly, the time information may be transmitted together with the clock source information.

Step 3. After receiving the information in step 2, the terminal employs, based on its own need, the time information corresponding to the clock source required by the terminal. For example, after the terminal receives the time information and the clock source information in step 2, if the terminal requires the UTC time (1) of the clock source (1), the terminal transmits the UTC time (1) of the clock source (1) to a higher-layer application.

In an optional implementation, the at least one piece of time information includes:
time information corresponding to multiple clock sources.

The multiple clock sources may be some or all of clock sources of time information that can be provided by the network device.

In this way, it is possible to directly provide the terminal with time information corresponding to multiple clock sources, so that the terminal can obtain the time information of the clock source required by the terminal.

Transmitting the first message through broadcast and transmitting the first message through dedicated signaling are separately described below as examples.

### Example 4

Step 1. The network transmits clock source information corresponding to time information to the terminal through broadcast. For example, in an SIB 9, UTC time (1) corresponds to the clock source (1), GPS time (1) corresponds to the clock source (1), UTC time (2) corresponds to the clock source (2), and DST time (1) corresponds to the clock source (2). Certainly, the time information may be transmitted together with the clock source information.

Step 2. After receiving the information in step 1, the terminal employs, based on its own need, the time information corresponding to the clock source required by the terminal. For example, after the terminal receives the time information and the clock source information in the SIB 9 in step 1, if the terminal requires the UTC time (1) of the clock source (1), the UE transmits the UTC time (1) of the clock source (1) to a higher-layer application.

### Example 5

Step 1. The network transmits clock source information corresponding to time information to the terminal through dedicated signaling. For example, in a DL information transfer message, UTC time (1) corresponds to the clock source (1), GPS time (1) corresponds to the clock source (1), UTC time (2) corresponds to the clock source (2), and DST time (1) corresponds to the clock source (2). Certainly, the time information may be transmitted together with the clock source information.

Step 2. After receiving the information in step 1, the terminal employs, based on its own need, the time information corresponding to the clock source required by the terminal. For example, after the terminal receives the time information and the clock source information in step 1, if the terminal requires the UTC time (1) of the clock source (1), the terminal transmits the UTC time (1) of the clock source (1) to a higher-layer application.

In an optional implementation, a clock source corresponding to each piece of time information is prescribed by a protocol; or
a clock source corresponding to each piece of time information is determined by subscription by the terminal with a network device.

The clock source corresponding to each piece of time information being prescribed by a protocol or determined by subscription may be that a clock source corresponding to each time type, or a clock source corresponding to each specific piece of time information is determined by the protocol or subscription. For example, it is determined that the UTC Time (1) corresponds to the clock source 1 and the UTC time (2) corresponds to the clock source 2.

In this implementation, the clock source corresponding to each piece of time information is prescribed by the protocol or determined by subscription, so that the network device may not transmit mapping information between time information and clock sources to the terminal, for example, the foregoing clock source information or clock source identifier, thereby reducing transmission overheads.

Certainly, in this embodiment of this disclosure, the clock source identifier of each clock source may also be determined by a protocol or subscription.

For example, in the case of prescription by a protocol, one way is to implicitly indicate the clock source identifier. For example, it is prescribed by the protocol that UTC time corresponds to the clock source (1), GPS time corresponds to the clock source (2), and DST time corresponds to a clock source (3). Another way is to explicitly indicate the clock source identifier. Different clock sources have their particular identifiers. For example, time information provided by a manufacturer 1 of a non-public network (Non-public Network, NPN) (1) corresponds to a clock source identifier 1, time information provided by a manufacturer 2 of an NPN (2) corresponds to a clock source identifier 2, time information provided by an operator 1 (for example, a public land mobile network (Public Land Mobile Network, PLMN) (1)) corresponds to a clock source identifier 3, and time information provided by an operator 2 (for example, a PLMN(2)) corresponds to a clock source identifier 4.

The determining by subscription by the terminal with the network side may be specifically that, in a subscription procedure between the terminal and the network side, the terminal transmits request information to request the time information corresponding to the required clock source. For example, the terminal requests to obtain, through subscription, time information corresponding to the clock source (1), or the terminal requests to obtain, through subscription, the UTC time corresponding to the clock source (1). After completing subscription of the terminal, the network side determines that time information to be provided to the terminal is time information requested by the terminal through subscription, for example, the UTC time of the clock source (1). In this embodiment, a clock source identifier may be implicitly or explicitly indicated, as in the indication manners in the case of prescription by a protocol.

In addition, the explicit indication of clock source identifiers may be that identifier information (for example, a clock source identifier) corresponding to each clock source is prescribed by a protocol or determined by subscription. That is, identifier information of different clock sources is determined, and then clock source identifiers of the clock sources corresponding to all pieces of time information are indicated in the first message.

In an optional implementation, a clock source identifier of the clock source corresponding to the at least one piece of time information may be indicated in any of the following three ways, and details are as follows:
the first message further includes the clock source identifier of the clock source corresponding to the at least one piece of time information; or
the clock source identifier of the clock source corresponding to the at least one piece of time information is implicitly indicated by a protocol; or
the clock source identifier of the clock source corresponding to the at least one piece of time information is implicitly indicated by subscription by the terminal with a network device.

That the first message further includes the clock source identifier of the clock source corresponding to the at least one piece of time information may be: The first message includes clock source identifiers of clock sources corresponding to all pieces of time information, so that a clock source corresponding to each piece of time information can be determined through these clock source identifiers. This implementation may be referred to as explicit indication of a clock source identifier in the first message. Certainly, mappings between clock source identifiers and clock sources may be prescribed by a protocol, or determined by the network device and the terminal through negotiation (for example, subscription), or the like. This is not limited.

That the clock source identifier of the clock source corresponding to the at least one piece of time information is implicitly indicated by a protocol may be: The first message does not include the clock source identifier of the clock source corresponding to the at least one piece of time information. Instead, clock source identifiers corresponding to all pieces of time information are prescribed by the protocol, so that after receiving all the pieces of time information, the terminal can determine a clock source corresponding to each piece of time information from the protocol.

That the clock source identifier of the clock source corresponding to the at least one piece of time information is implicitly indicated by subscription by the terminal with a network device may be: The first message does not include the clock source identifier of the clock source corresponding to the at least one piece of time information and instead, a clock source identifier corresponding to each piece of time information is determined by subscription by the terminal with the network device, so that after receiving all the pieces of time information, the terminal can determine a clock source corresponding to each piece of time information from the subscription.

Implicit indication of a clock source can reduce overheads for the first message.

It should be noted that in the embodiments of this disclosure, the various implementations provided above may be implemented as follows:

The network side may transmit clock source information and time information to the terminal through broadcast or dedicated signaling. The clock source information may be implicitly indicated, for example, a particular time type (for example, UTC) corresponding to a particular clock source, or explicitly indicated by using, for example, a clock source identifier.

Method 1: The network side transmits time information of multiple clock sources all to the terminal (in a broadcast mode or dedicated signaling mode), and indicates that different clock sources correspond to different time information. After receiving the time information, the terminal employs, based on its own need, the time information corresponding to the clock source required by the terminal (for example, the terminal transmits the time information corresponding to the required clock source to a higher layer (for example, the application layer)).

Method 2: The terminal transmits request information to request the time information of the clock source required by the terminal. For example, for the broadcast mode, the terminal provides its own required clock source information when transmitting a system information request message; and for the dedicated signaling mode, the terminal provides its own required clock source information through uplink dedicated signaling (for example, a UL Information Transfer message). The network side transmits, according to the request of the terminal, the time information corresponding to the clock source to the terminal. After receiving the time information, the terminal employs, based on its own need, the time information corresponding to the clock source required by the terminal (for example, the terminal transmits the time information corresponding to the required clock source to a higher layer (for example, the application layer)).

Method 3: The network side transmits, based on the subscription information of the terminal (for example, the terminal obtains time information corresponding to a particular clock source through subscription with the network side), the time information corresponding to the clock source required (or subscribed to) by the terminal to the terminal through, for example, dedicated signaling, for example, a DL Information Transfer message.

Additionally, the network side and the terminal determine through negotiation identifier information (for example, clock source identifiers) of different clock sources. The negotiation manner may be prescription by a protocol, or negotiation through signaling exchange by the network side and the terminal. For example, the terminal subscribes with the network side to the time information corresponding to the required clock source. Identifier information of a clock source may be indicated implicitly, for example, a particular time type (for example, UTC) corresponding to a particular clock source, or explicitly indicated by using, for example, a clock source identifier.

In this embodiment of this disclosure, the first message is received, where the first message includes the at least one piece of time information, and each piece of time information corresponds to a respective clock source; and the time information corresponding to the clock source required by the terminal is obtained from the first message. In this way, the terminal can obtain the time information corresponding to the clock source required by the terminal, so that timing performance of the terminal can be improved. For example, the network side may provide time information of different clock sources to the terminal, and the terminal obtains, through negotiation with the network side, the time information corresponding to the clock source required by the terminal.

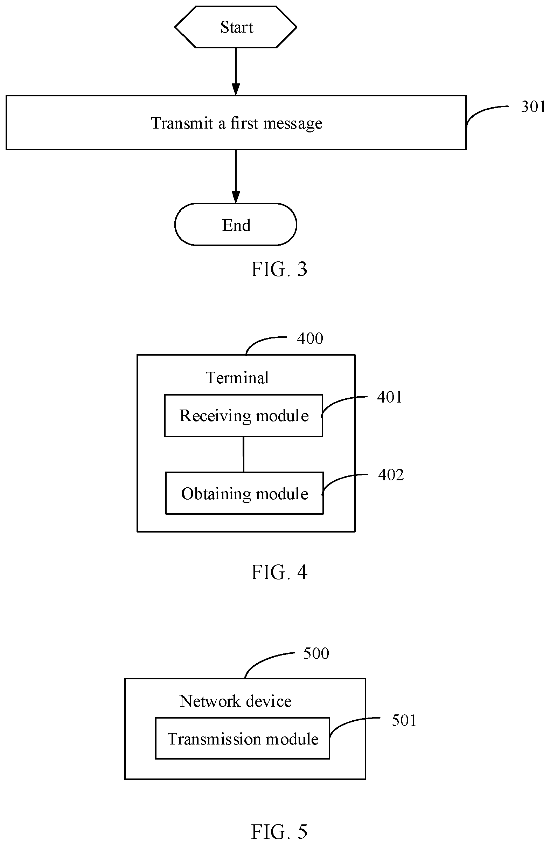

FIG. 3 is a flowchart of a time information transmission method according to an embodiment of this disclosure. The method is applied to a network device, and as shown in FIG. 3, includes the following step.

Step 301. Transmit a first message, where the first message includes at least one piece of time information, and each piece of time information corresponds to a respective clock source.

Optionally, the at least one piece of time information includes:
at least one piece of time information associated with a terminal; or
time information corresponding to multiple clock sources.

The terminal is a terminal that receives the first message.

Optionally, the at least one piece of time information associated with the terminal includes:
at least one piece of time information subscribed to by subscription information of the terminal; or
at least one piece of time information requested by a request message transmitted by the terminal.

Optionally, the request message includes at least one of the following:
a clock source identifier, a time type identifier, and a time precision identifier, where
in a case that the request message includes the clock source identifier, a clock source corresponding to the at least one piece of time information is a clock source identified by the clock source identifier; and/or
in a case that the request message includes the time type identifier, a time type of the at least one piece of time information is a time type identified by the time type identifier; and/or
in a case that the request message includes the time precision identifier, time precision of the at least one piece of time information is time precision identified by the time precision identifier.

Optionally, a clock source corresponding to each piece of time information is prescribed by a protocol; or
a clock source corresponding to each piece of time information is determined by subscription by the terminal with the network device.

The terminal is a terminal that receives the first message.

Optionally, the first message further includes a clock source identifier of the clock source corresponding to the at least one piece of time information; or
a clock source identifier of the clock source corresponding to the at least one piece of time information is implicitly indicated by a protocol; or
a clock source identifier of the clock source corresponding to the at least one piece of time information is implicitly indicated by subscription by the terminal with a network device.

The terminal is a terminal that receives the first message.

Optionally, the first message includes:
a broadcast message or downlink dedicated signaling.

Optionally, different time information in the at least one piece of time information corresponds to different clock sources; or
in a case that the at least one piece of time information is multiple pieces of time information, M pieces of time information corresponding to a same clock source are present in the multiple pieces of time information, where M is an integer greater than 1, and M is less than or equal to the number of pieces of time information included in the first message; or
in a case that the at least one piece of time information is multiple pieces of time information, N pieces of time information corresponding to different clock sources but belonging to a same time type are present in the multiple pieces of time information, where N is an integer greater than 1, and N is less than or equal to the number of pieces of time information included in the first message.

It should be noted that this embodiment is an implementation corresponding to the network device in the embodiment in FIG. 2, and for specific implementation of this embodiment, reference may be made to the relevant descriptions of the embodiment in FIG. 2, and a same beneficial effect can be achieved. To avoid repetition, details are not described in this embodiment again.

FIG. 4 is a structural diagram of a terminal according to an embodiment of this disclosure. As shown in FIG. 4, the terminal 400 includes:
a receiving module 401, configured to receive a first message, where the first message includes at least one piece of time information, and each piece of time information corresponds to a respective clock source; and
an obtaining module 402, configured to obtain, from the first message, time information corresponding to a clock source required by the terminal.

Optionally, the at least one piece of time information includes:
at least one piece of time information associated with the terminal; or
time information corresponding to multiple clock sources.

Optionally, the at least one piece of time information associated with the terminal includes:
at least one piece of time information subscribed to by subscription information of the terminal; or
at least one piece of time information requested by a request message transmitted by the terminal.

Optionally, the request message includes at least one of the following:
a clock source identifier, a time type identifier, and a time precision identifier, where
in a case that the request message includes the clock source identifier, a clock source corresponding to the at least one piece of time information is a clock source identified by the clock source identifier; and/or
in a case that the request message includes the time type identifier, a time type of the at least one piece of time information is a time type identified by the time type identifier; and/or
in a case that the request message includes the time precision identifier, time precision of the at least one piece of time information is time precision identified by the time precision identifier.

Optionally, a clock source corresponding to each piece of time information is prescribed by a protocol; or
a clock source corresponding to each piece of time information is determined by subscription by the terminal with a network device.

Optionally, the first message further includes a clock source identifier of the clock source corresponding to the at least one piece of time information; or
a clock source identifier of the clock source corresponding to the at least one piece of time information is implicitly indicated by a protocol; or
a clock source identifier of the clock source corresponding to the at least one piece of time information is implicitly indicated by subscription by the terminal with a network device.

Optionally, the first message includes:
a broadcast message or downlink dedicated signaling.

Optionally, different time information in the at least one piece of time information corresponds to different clock sources; or
in a case that the at least one piece of time information is multiple pieces of time information, M pieces of time information corresponding to a same clock source are present in the multiple pieces of time information, where M is an integer greater than 1, and M is less than or equal to the number of pieces of time information included in the first message; or
in a case that the at least one piece of time information is multiple pieces of time information, N pieces of time information corresponding to different clock sources but belonging to a same time type are present in the multiple pieces of time information, where N is an integer greater than 1, and N is less than or equal to the number of pieces of time information included in the first message.

The terminal provided by this embodiment of this disclosure can implement the processes implemented by the terminal in the method embodiment in FIG. 2, and can improve timing performance of the terminal. To avoid repetition, details are not described herein again.

FIG. 5 is a structural diagram of a network device according to an embodiment of this disclosure. As shown in FIG. 5, the network device 500 includes:
a transmission module 501, configured to transmit a first message, where the first message includes at least one piece of time information, and each piece of time information corresponds to a respective clock source.

Optionally, the at least one piece of time information includes:
at least one piece of time information associated with a terminal; or
time information corresponding to multiple clock sources.

The terminal may be a terminal that receives the first message.

Optionally, the at least one piece of time information associated with the terminal includes:
at least one piece of time information subscribed to by subscription information of the terminal; or
at least one piece of time information requested by a request message transmitted by the terminal.

Optionally, the request message includes at least one of the following:
a clock source identifier, a time type identifier, and a time precision identifier, where
in a case that the request message includes the clock source identifier, a clock source corresponding to the at least one piece of time information is a clock source identified by the clock source identifier; and/or
in a case that the request message includes the time type identifier, a time type of the at least one piece of time information is a time type identified by the time type identifier; and/or
in a case that the request message includes the time precision identifier, time precision of the at least one piece of time information is time precision identified by the time precision identifier.

Optionally, a clock source corresponding to each piece of time information is prescribed by a protocol; or
a clock source corresponding to each piece of time information is determined by subscription by the terminal with the network device.

The terminal is a terminal that receives the first message.

Optionally, the first message further includes a clock source identifier of the clock source corresponding to the at least one piece of time information; or
a clock source identifier of the clock source corresponding to the at least one piece of time information is implicitly indicated by a protocol; or
a clock source identifier of the clock source corresponding to the at least one piece of time information is implicitly indicated by subscription by the terminal with the network device.

The terminal may be a terminal that receives the first message.

Optionally, the first message includes:
a broadcast message or downlink dedicated signaling.

Optionally, different time information in the at least one piece of time information corresponds to different clock sources; or
in a case that the at least one piece of time information is multiple pieces of time information, M pieces of time information corresponding to a same clock source are present in the multiple pieces of time information, where M is an integer greater than 1, and M is less than or equal to the number of pieces of time information included in the first message; or
in a case that the at least one piece of time information is multiple pieces of time information, N pieces of time information corresponding to different clock sources but belonging to a same time type are present in the multiple pieces of time information, where N is an integer greater than 1, and N is less than or equal to the number of pieces of time information included in the first message.

The network device provided by this embodiment of this disclosure can implement each process implemented by the network device in the method embodiment in FIG. 3, and can improve timing performance of the terminal. To avoid repetition, details are not described herein again.

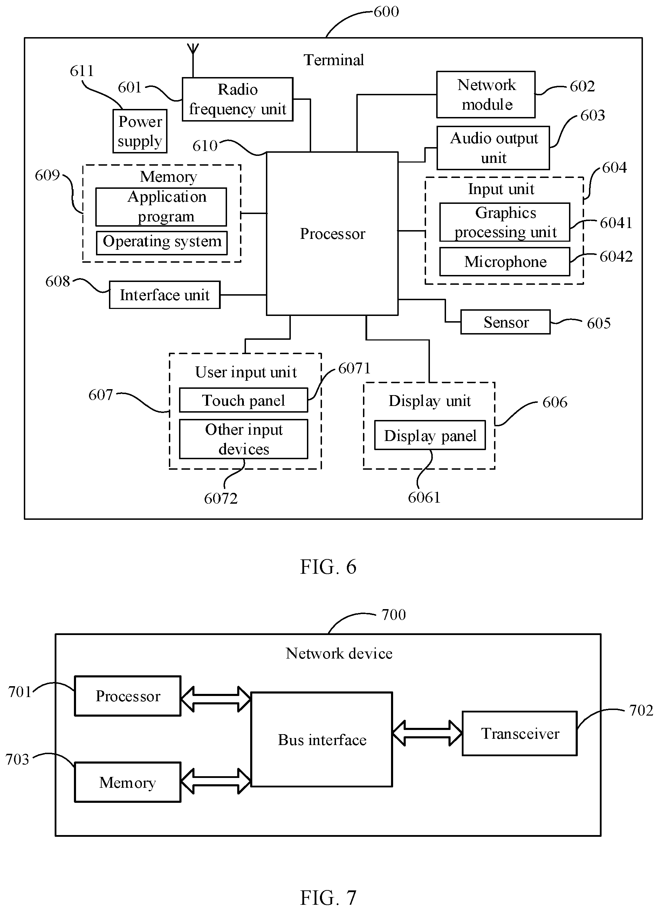

FIG. 6 is a schematic diagram of a hardware structure of a terminal for implementing the embodiments of this disclosure.

The terminal 600 includes but is not limited to components such as a radio frequency unit 601, a network module 602, an audio output unit 603, an input unit 604, a sensor 605, a display unit 606, a user input unit 607, an interface unit 608, a memory 609, a processor 610, and a power supply 611. A person skilled in the art may understand that the terminal structure shown in FIG. 6 does not constitute a limitation on the terminal. The terminal may include more or fewer components than those shown in the figure, or combine some of the components, or have different arrangements of components. In this embodiment of this disclosure, the terminal includes but is not limited to a mobile phone, a tablet computer, a laptop computer, a personal digital assistant, an in-vehicle terminal, a robot, a wearable device, a pedometer, and the like.

The radio frequency unit 601 is configured to receive a first message, where the first message includes at least one piece of time information, and each piece of time information corresponds to a respective clock source.

The processor 610 is configured to obtain, from the first message, time information corresponding to a clock source required by the terminal.

Optionally, the at least one piece of time information includes:
at least one piece of time information associated with the terminal; or
time information corresponding to multiple clock sources.

Optionally, the at least one piece of time information associated with the terminal includes:
at least one piece of time information subscribed to by subscription information of the terminal; or
at least one piece of time information requested by a request message transmitted by the terminal.

Optionally, the request message includes at least one of the following:
a clock source identifier, a time type identifier, and a time precision identifier, where
in a case that the request message includes the clock source identifier, a clock source corresponding to the at least one piece of time information is a clock source identified by the clock source identifier; and/or
in a case that the request message includes the time type identifier, a time type of the at least one piece of time information is a time type identified by the time type identifier; and/or
in a case that the request message includes the time precision identifier, time precision of the at least one piece of time information is time precision identified by the time precision identifier.

Optionally, a clock source corresponding to each piece of time information is prescribed by a protocol; or
a clock source corresponding to each piece of time information is determined by subscription by the terminal with a network device.

Optionally, the first message further includes a clock source identifier of the clock source corresponding to the at least one piece of time information; or
a clock source identifier of the clock source corresponding to the at least one piece of time information is implicitly indicated by a protocol; or
a clock source identifier of the clock source corresponding to the at least one piece of time information is implicitly indicated by subscription by the terminal with a network device.

Optionally, the first message includes:
a broadcast message or downlink dedicated signaling.

Optionally, different time information in the at least one piece of time information corresponds to different clock sources; or
in a case that the at least one piece of time information is multiple pieces of time information, M pieces of time information corresponding to a same clock source are present in the multiple pieces of time information, where M is an integer greater than 1, and M is less than or equal to the number of pieces of time information included in the first message; or
in a case that the at least one piece of time information is multiple pieces of time information, N pieces of time information corresponding to different clock sources but belonging to a same time type are present in the multiple pieces of time information, where N is an integer greater than 1, and N is less than or equal to the number of pieces of time information included in the first message.

The terminal can improve timing performance of the terminal.

It should be understood that in this embodiment of this disclosure, the radio frequency unit 601 may be configured to: receive and send signals in an information receiving/sending process or a call process; and specifically, send the downlink data received from a base station to the processor 610 for processing, and send uplink data to the base station. Usually, the radio frequency unit 601 includes but is not limited to an antenna, at least one amplifier, a transceiver, a coupler, a low noise amplifier, a duplexer, and the like. In addition, the radio frequency unit 601 may further communicate with a network and other devices through a wireless communications system.

The terminal provides wireless broadband internet access for a user by using the network module 602, for example, helping the user send and receive e-mails, browse web pages, and access streaming media.

The audio output unit 603 may convert audio data received by the radio frequency unit 601 or the network module 602 or stored in the memory 609 into an audio signal and output the audio signal as a sound. In addition, the audio output unit 603 may further provide audio output (for example, a call signal reception tone or a message reception tone) that is related to a particular function performed by the terminal 600. The audio output unit 603 includes a loudspeaker, a buzzer, a phone receiver, and the like.

The input unit 604 is configured to receive an audio signal or a video signal. The input unit 604 may include a graphics processing unit (Graphics Processing Unit, GPU) 6041 and a microphone 6042, and the graphics processing unit 6041 processes image data of a still picture or a video obtained by an image capture apparatus (for example, a camera) in an image capture mode or a video capture mode. A processed image frame may be displayed on the display unit 606. An image frame processed by the graphics processing unit 6041 may be stored in the memory 609 (or another storage medium), or may be sent by the radio frequency unit 601 or the network module 602. The microphone 6042 may receive a sound, and can process the sound into audio data. In a phone call mode, processed audio data may be converted, for output, into a format for transmission by the radio frequency unit 601 to a mobile communications base station.

The terminal 600 further includes at least one sensor 605, for example, an optical sensor, a motion sensor, and another sensor. Specifically, the optical sensor includes an ambient light sensor and a proximity sensor. The ambient light sensor may adjust brightness of a display panel 6061 based on intensity of ambient light. When the terminal 600 moves near an ear, the proximity sensor may disable the display panel 6061 and/or backlight. As a motion sensor, an accelerometer sensor may detect magnitudes of accelerations in various directions (there are usually three axes), may detect the magnitude and direction of gravity when the terminal is still, and may be configured for terminal posture recognition (for example, landscape/portrait mode switching, related gaming, or magnetometer posture calibration), functions related to vibration recognition (for example, pedometer or tapping), or the like. The sensor 605 may further include a fingerprint sensor, a pressure sensor, an iris sensor, a molecular sensor, a gyroscope, a barometer, a hygrometer, a thermometer, or an infrared sensor. Details are not described herein.

The display unit 606 is configured to display information input by the user or information provided for the user. The display unit 606 may include the display panel 6061. Optionally, the display panel 6061 may be configured in a form of a liquid crystal display (Liquid Crystal Display, LCD), an organic light-emitting diode (Organic Light-Emitting Diode, OLED), or the like.

The user input unit 607 may be configured to receive input digit or character information, and generate key signal input that is related to user setting and function control of the terminal. Specifically, the user input unit 607 includes a touch panel 6071 and other input devices 6072. The touch panel 6071 is also referred to as a touchscreen, and may collect a touch operation of the user on or near the touch panel (for example, an operation performed on or near the touch panel 6071 by the user by using any appropriate object or accessory such as a finger or a stylus). The touch panel 6071 may include two parts: a touch detection apparatus and a touch controller. The touch detection apparatus detects a touch orientation of the user, and detects a signal brought by the touch operation, and transmits the signal to the touch controller. The touch controller receives touch information from the touch detection apparatus, converts the touch information into touch point coordinates, sends the touch point coordinates to the processor 610, receives and executes a command sent by the processor 610. In addition, the touch panel 6071 may be implemented in a plurality of types, for example, as a resistive, capacitive, infrared, or surface acoustic wave touch panel. In addition to the touch panel 6071, the user input unit 607 may further include the other input devices 6072. Specifically, the other input devices 6072 may include but are not limited to a physical keyboard, a function key (for example, a volume control key or a power on/off key), a track ball, a mouse, and a joystick. Details are not described herein.

Further, the touch panel 6071 may cover the display panel 6061. After detecting a touch operation on or near the touch panel 6071, the touch panel 6071 transmits the touch operation to the processor 610 to determine a type of a touch event. Then the processor 610 provides corresponding visual output on the display panel 6061 based on the type of the touch event. In FIG. 6, the touch panel 6071 and the display panel 6061 serve as two separate components to implement input and output functions of the terminal. However, in some embodiments, the touch panel 6071 and the display panel 6061 may be integrated to implement the input and output functions of the terminal. This is not specifically limited herein.

The interface unit 608 is an interface for connecting an external apparatus to the terminal 600. For example, the external apparatus may include a wired or wireless headphone port, an external power supply (or battery charger) port, a wired or wireless data port, a memory card port, a port for connecting an apparatus provided with an identification module, an audio input/output (I/O) port, a video I/O port, or an earphone port. The interface unit 608 may be configured to receive input (for example, data information and electric power) from the external apparatus, and transmit the received input to one or more elements in the terminal 600; or may be configured to transmit data between the terminal 600 and the external apparatus.

The memory 609 may be configured to store software programs and various types of data. The memory 609 may mainly include a program storage region and a data storage region. The program storage region may store an operating system, an application program required by at least one function (for example, an audio play function or an image play function), and the like. The data storage region may store data (for example, audio data and a phone book) created based on usage of the mobile phone. In addition, the memory 609 may include a high-speed random access memory, and may further include a nonvolatile memory(for example, at least one magnetic disk storage device or a flash memory device) or other volatile solid-state storage devices.

The processor 610 is a control center of the terminal. It connects various parts of the entire terminal by using various interfaces and lines, and executes various functions and data processing of the terminal by running or executing software programs and/or modules stored in the memory 609 and invoking data stored in the memory 609, so as to perform overall monitoring on the terminal. The processor 610 may include one or more processing units. Optionally, the processor 610 may integrate an application processor and a modem processor. The application processor mainly processes an operating system, a user interface, an application program, and the like. The modem processor mainly processes wireless communication. It can be understood that the modem processor may be alternatively not integrated in the processor 610.

The terminal 600 may further include a power supply 611 (for example, a battery) that supplies power to the components. Optionally, the power supply 611 may be logically connected to the processor 610 by using a power management system, so as to implement functions such as charging management, discharging management, and power consumption management by using the power management system.

In addition, the terminal 600 includes some functional modules that are not shown. Details are not described herein.

Optionally, an embodiment of this disclosure further provides a terminal, including: a processor 610, a memory 609, and a computer program that is stored in the memory 609 and capable of running on the processor 610. When the computer program is executed by the processor 610, the processes in the foregoing embodiments of the time information obtaining method are implemented, with the same technical effects achieved. To avoid repetition, details are not described herein again.

FIG. 7 is a structural diagram of another network device according to an embodiment of this disclosure. As shown in FIG. 7, the network device 700 includes a processor 701, a transceiver 702, a memory 703, and a bus interface.

The transceiver 702 is configured to transmit a first message, where the first message includes at least one piece of time information, and each piece of time information corresponds to a respective clock source.

Optionally, the at least one piece of time information includes:
at least one piece of time information associated with a terminal; or
time information corresponding to multiple clock sources.

Optionally, the at least one piece of time information associated with the terminal includes:
at least one piece of time information subscribed to by subscription information of the terminal; or
at least one piece of time information requested by a request message transmitted by the terminal.

Optionally, the request message includes at least one of the following:
a clock source identifier, a time type identifier, and a time precision identifier, where
in a case that the request message includes the clock source identifier, a clock source corresponding to the at least one piece of time information is a clock source identified by the clock source identifier; and/or
in a case that the request message includes the time type identifier, a time type of the at least one piece of time information is a time type identified by the time type identifier; and/or
in a case that the request message includes the time precision identifier, time precision of the at least one piece of time information is time precision identified by the time precision identifier.

Optionally, a clock source corresponding to each piece of time information is prescribed by a protocol; or
a clock source corresponding to each piece of time information is determined by subscription by the terminal with a network device.

Optionally, the first message further includes a clock source identifier of the clock source corresponding to the at least one piece of time information; or
a clock source identifier of the clock source corresponding to the at least one piece of time information is implicitly indicated by a protocol; or
a clock source identifier of the clock source corresponding to the at least one piece of time information is implicitly indicated by subscription by the terminal with a network device.

The terminal may be a terminal that receives the first message.

Optionally, the first message includes:
a broadcast message or downlink dedicated signaling.

Optionally, different time information in the at least one piece of time information corresponds to different clock sources; or
in a case that the at least one piece of time information is multiple pieces of time information, M pieces of time information corresponding to a same clock source are present in the multiple pieces of time information, where M is an integer greater than 1, and M is less than or equal to the number of pieces of time information included in the first message; or
in a case that the at least one piece of time information is multiple pieces of time information, N pieces of time information corresponding to different clock sources but belonging to a same time type are present in the multiple pieces of time information, where N is an integer greater than 1, and N is less than or equal to the number of pieces of time information included in the first message.

The network device can improve timing performance of the terminal.

The transceiver 702 is configured to receive and send data under control of the processor 701. The transceiver 702 includes at least two antenna ports.

In FIG. 7, a bus architecture may include any quantity of interconnected buses and bridges, and specifically connect together various circuits of one or more processors represented by the processor 701 and a memory represented by the memory 703. The bus architecture may further interconnect various other circuits such as a peripheral device, a voltage regulator, and a power management circuit. These are all common sense in the art, and therefore are not further described in this specification. The bus interface provides an interface. The transceiver 702 may be a plurality of elements, including a transmitter and a receiver, and provides units configured to communicate with various other apparatuses over a transmission medium. For different user equipment, the user interface 704 may also be an interface capable of externally or internally connecting a required device, and the connected device includes but is not limited to a keypad, a display, a speaker, a microphone, a joystick, and the like.

The processor 701 is responsible for management of the bus architecture and general processing, and the memory 703 may store data for use by the processor 701 when the processor 701 performs an operation.

Optionally, an embodiment of this disclosure further provides a network device, including: a processor 701, a memory 703, and a computer program that is stored in the memory 703 and capable of running on the processor 701. When the computer program is executed by the processor 701, the processes in the foregoing embodiments of the time information transmission method are implemented, with the same technical effects achieved. To avoid repetition, details are not described herein again.

An embodiment of this disclosure further provides a computer-readable storage medium. The computer-readable storage medium stores a computer program, and when the computer program is executed by a processor, the processes of the embodiment of the time information obtaining method according to the embodiments of this disclosure are implemented, or when the computer program is executed by a processor, the processes of the embodiment of the time information transmission method according to the embodiments of this disclosure are implemented, with the same technical effect achieved. To avoid repetition, details are not described herein again. For example, the computer-readable storage medium is a read-only memory (Read-Only Memory, ROM for short), a random access memory (Random Access Memory, RAM for short), a magnetic disk, an optical disc, or the like.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially or a part thereof that contributes to related technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this disclosure.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiments are merely examples. For example, the unit division is merely logical function division and may be other division in actual implementation. For example, a plurality of units or components may be combined or integrated into another system, or some elements may be ignored or may not be performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, and may be located in one position or distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in a form of a software functional unit and sold or used as a separate product, the functions may be stored in a computer-readable storage medium. Based on such an understanding, the technical solutions of this disclosure essentially, or the part contributing to related technologies, or some of the technical solutions may be embodied in a form of a software product. The computer software product is stored in a storage medium, and includes instructions for enabling a computer device (which may be a personal computer, a server, a network device, or the like) to perform all or some of the steps of the methods described in the embodiments of this disclosure. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling relevant hardware. The program may be stored in a computer-readable storage medium. When the program runs, the processes of the methods in the embodiments are performed. The foregoing storage medium may be a magnetic disk, an optical disc, a read-only memory (Read-Only Memory, ROM), a random access memory (Random Access Memory, RAM), or the like.

It can be understood that the embodiments described in the embodiments of this disclosure may be implemented by hardware, software, firmware, middleware, microcode, or a combination thereof. For hardware implementation, the processing unit may be implemented in one or more application-specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the techniques described in the embodiments of this disclosure may be implemented by modules (for example, procedures or functions) that perform the functions described in the embodiments of this disclosure. Software code may be stored in the memory and executed by the processor. The memory may be implemented in or outside the processor.

The embodiments of this disclosure are described above with reference to the accompanying drawings, but this disclosure is not limited to these embodiments. These embodiments are only illustrative rather than restrictive. Inspired by this disclosure, a person of ordinary skill in the art can still derive a plurality of variations without departing from the essence of this disclosure and the protection scope of the claims. All these variations shall fall within the protection of this disclosure.

## Claims

1. A time information obtaining method, applied to a terminal, comprising:
receiving a first message, wherein the first message comprises at least one piece of time information, and each piece of time information corresponds to a respective clock source; and
obtaining, from the first message, time information corresponding to a clock source required by the terminal.

2. The method according to claim 1, wherein the at least one piece of time information comprises:
at least one piece of time information associated with the terminal; or
time information corresponding to multiple clock sources.

3. The method according to claim 2, wherein the at least one piece of time information associated with the terminal comprises:
at least one piece of time information subscribed to by subscription information of the terminal; or
at least one piece of time information requested by a request message transmitted by the terminal.

4. The method according to claim 3, wherein the request message comprises at least one of the following:
a clock source identifier, a time type identifier, and a time precision identifier, wherein
in a case that the request message comprises the clock source identifier, a clock source corresponding to the at least one piece of time information is a clock source identified by the clock source identifier; and/or
in a case that the request message comprises the time type identifier, a time type of the at least one piece of time information is a time type identified by the time type identifier; and/or
in a case that the request message comprises the time precision identifier, time precision of the at least one piece of time information is time precision identified by the time precision identifier.

5. The method according to any one of claims 1 to 4, wherein a clock source corresponding to each piece of time information is prescribed by a protocol; or
a clock source corresponding to each piece of time information is determined by subscription by the terminal with a network device.

6. The method according to any one of claims 1 to 4, wherein the first message further comprises a clock source identifier of the clock source corresponding to the at least one piece of time information; or
a clock source identifier of the clock source corresponding to the at least one piece of time information is implicitly indicated by a protocol; or
a clock source identifier of the clock source corresponding to the at least one piece of time information is implicitly indicated by subscription by the terminal with a network device.

7. The method according to any one of claims 1 to 4, wherein the first message comprises:
a broadcast message or downlink dedicated signaling.

8. The method according to any one of claims 1 to 4, wherein different time information in the at least one piece of time information corresponds to different clock sources; or
in a case that the at least one piece of time information is multiple pieces of time information, M pieces of time information corresponding to a same clock source are present in the multiple pieces of time information, wherein M is an integer greater than 1, and M is less than or equal to the number of pieces of time information comprised in the first message; or
in a case that the at least one piece of time information is multiple pieces of time information, N pieces of time information corresponding to different clock sources but belonging to a same time type are present in the multiple pieces of time information, wherein N is an integer greater than 1, and N is less than or equal to the number of pieces of time information comprised in the first message.

9. A time information transmission method, applied to a network device, comprising:
transmitting a first message, wherein the first message comprises at least one piece of time information, and each piece of time information corresponds to a respective clock source.

10. The method according to claim 9, wherein the at least one piece of time information comprises:
at least one piece of time information associated with a terminal; or
time information corresponding to multiple clock sources.

11. The method according to claim 10, wherein the at least one piece of time information associated with the terminal comprises:
at least one piece of time information subscribed to by subscription information of the terminal; or
at least one piece of time information requested by a request message transmitted by the terminal.

12. The method according to claim 11, wherein the request message comprises at least one of the following:
a clock source identifier, a time type identifier, and a time precision identifier, wherein
in a case that the request message comprises the clock source identifier, a clock source corresponding to the at least one piece of time information is a clock source identified by the clock source identifier; and/or
in a case that the request message comprises the time type identifier, a time type of the at least one piece of time information is a time type identified by the time type identifier; and/or
in a case that the request message comprises the time precision identifier, time precision of the at least one piece of time information is time precision identified by the time precision identifier.

13. The method according to any one of claims 9 to 12, wherein a clock source corresponding to each piece of time information is prescribed by a protocol; or
a clock source corresponding to each piece of time information is determined by subscription by the terminal with the network device.

14. The method according to any one of claims 9 to 12, wherein the first message further comprises a clock source identifier of the clock source corresponding to the at least one piece of time information; or
a clock source identifier of the clock source corresponding to the at least one piece of time information is implicitly indicated by a protocol; or
a clock source identifier of the clock source corresponding to the at least one piece of time information is implicitly indicated by subscription by the terminal with the network device.

15. The method according to any one of claims 9 to 12, wherein the first message comprises:
a broadcast message or downlink dedicated signaling.

16. The method according to any one of claims 9 to 12, wherein different time information in the at least one piece of time information corresponds to different clock sources; or
in a case that the at least one piece of time information is multiple pieces of time information, M pieces of time information corresponding to a same clock source are present in the multiple pieces of time information, wherein M is an integer greater than 1, and M is less than or equal to the number of pieces of time information comprised in the first message; or
in a case that the at least one piece of time information is multiple pieces of time information, N pieces of time information corresponding to different clock sources but belonging to a same time type are present in the multiple pieces of time information, wherein N is an integer greater than 1, and N is less than or equal to the number of pieces of time information comprised in the first message.

17. A terminal, comprising:
a receiving module, configured to receive a first message, wherein the first message comprises at least one piece of time information, and each piece of time information corresponds to a respective clock source; and
an obtaining module, configured to obtain, from the first message, time information corresponding to a clock source required by the terminal.

18. The terminal according to claim 17, wherein the at least one piece of time information comprises:
at least one piece of time information associated with the terminal; or
time information corresponding to multiple clock sources.

19. The terminal according to claim 18, wherein the at least one piece of time information associated with the terminal comprises:
at least one piece of time information subscribed to by subscription information of the terminal; or
at least one piece of time information requested by a request message transmitted by the terminal.

20. The terminal according to claim 19, wherein the request message comprises at least one of the following:
a clock source identifier, a time type identifier, and a time precision identifier, wherein
in a case that the request message comprises the clock source identifier, a clock source corresponding to the at least one piece of time information is a clock source identified by the clock source identifier; and/or
in a case that the request message comprises the time type identifier, a time type of the at least one piece of time information is a time type identified by the time type identifier; and/or
in a case that the request message comprises the time precision identifier, time precision of the at least one piece of time information is time precision identified by the time precision identifier.

21. A network device, comprising:
a transmission module, configured to transmit a first message, wherein the first message comprises at least one piece of time information, and each piece of time information corresponds to a respective clock source.

22. The network device according to claim 21, wherein the at least one piece of time information comprises:
at least one piece of time information associated with a terminal; or
time information corresponding to multiple clock sources.

23. The network device according to claim 22, wherein the at least one piece of time information associated with the terminal comprises:
at least one piece of time information subscribed to by subscription information of the terminal; or
at least one piece of time information requested by a request message transmitted by the terminal.

24. The network device according to claim 23, wherein the request message comprises at least one of the following:
a clock source identifier, a time type identifier, and a time precision identifier, wherein
in a case that the request message comprises the clock source identifier, a clock source corresponding to the at least one piece of time information is a clock source identified by the clock source identifier; and/or
in a case that the request message comprises the time type identifier, a time type of the at least one piece of time information is a time type identified by the time type identifier; and/or
in a case that the request message comprises the time precision identifier, time precision of the at least one piece of time information is time precision identified by the time precision identifier.

25. A terminal, comprising a memory, a processor, and a program stored in the memory and capable of running on the processor, wherein when the program is executed by the processor, the steps of the time information obtaining method according to any one of claims 1 to 8 are implemented.

26. A network device, comprising a memory, a processor, and a program stored in the memory and capable of running on the processor, wherein when the program is executed by the processor, the steps of the time information transmission method according to any one of claims 9 to 16 are implemented.

27. A computer-readable storage medium, wherein the computer-readable storage medium stores a computer program, and when the computer program is executed by a processor, the steps of the time information obtaining method according to any one of claims 1 to 8 are implemented, or when the computer program is executed by a processor, the steps of the time information transmission method according to any one of claims 9 to 16 are implemented.
